Europäisches Patentamt

European Patent Office

Office européen des brevets

(11) Publication number: **0 210 768**
**B1**

(12) EUROPEAN PATENT SPECIFICATION

(45) Date of publication of patent specification: 07.06.89

(21) Application number: 86305264.3

(22) Date of filing: 08.07.86

(51) Int. Cl.⁴: **B 60 K 17/04,** B 60 K 5/02, B 62 D 21/18

(54) Low level load platform delivery vehicle.

(30) Priority: 25.07.85 GB 8518866
23.04.86 GB 8609898

(43) Date of publication of application:
04.02.87 Bulletin 87/06

(45) Publication of the grant of the patent:
07.06.89 Bulletin 89/23

(84) Designated Contracting States:
AT BE CH DE FR GB IT LI LU NL SE

(56) References cited:
CH-A- 495 246
DE-A-1 680 657
FR-A- 689 987
FR-A-1 144 772
GB-A-1 090 727

(73) Proprietor: Scottish & Newcastle Breweries plc
Abbey Brewery Holyrood Road
Edinburgh EH8 8YS Scotland (GB)

(72) Inventor: Thomson, George Hamilton
67 Kepscaith Road
Whitburn West Lothian (GB)
Inventor: Stark, Raymond Harvey
1 Munro Drive
Edinburgh EH13 0EG (GB)

(74) Representative: Murgitroyd, Ian G. et al
Murgitroyd and Company Mitchell House 333
Bath Street
Glasgow G2 4ER (GB)

Courier Press, Leamington Spa, England.

## Description

This invention relates to a low level load plat form delivery vehicle.

Commercial vehicles used, for example, by brewery companies for product deliveries to retail outlets have to meet a number of special ised requirements.

A truck load of full beer kegs is particularly heavy leading to problems in arranging the weight distribution of the load so as to ensure that the maximum permitted axle loadings for the vehicle are not exceeded. This problem can be overcome by using large articulated vehicles. However, there are certain difficulties in using such vehicles. In particular, such vehicles require drivers with a higher grade of licence thereby increasing labour costs and they are difficult to manoeuvre making devlieries to cer tian urban locations extremely difficult.

Thus, previously, rigid trucks have been used with the problems of weight distribution and overloading of the front axle being overcome by, for example, erecting a bulkhead towards the front of the loading area of the truck to restrict the loading area and prevent it from being loaded up towards the front. This is obvi ously inefficient as part of the loading area, which could be usefully employed when lighter goods are being carried, is inaccessible. Alterna tively trucks having four steerable wheels have been used. However, such trucks are more expensive to purchase initially, and in use have the problem of limited steering lock due to space limitations around the cab area of the vehicle chassis. Furthermore the increase in front axle loading capacity is only around half a ton.

A further problem is that as the driveshaft of the vehicle has to run beneath the loading area it is not possible to arrange the loading area at a low height for ease of loading and unloading. This can be overcome by running a tunnel, con taining the driveshaft, down the centre of the loading area. However, the presence of a central driveshaft tunnel on the loading area restricts the area available for load carrying and also makes it impractical to unload from one side only.

Front wheel drive vehicles are well known, and it is known in such vehicles to position the engine rearwardly and the gearbox forwardly of the front axle; see for example GB—A—1 090 727 and FR—A—1 144 772. How ever, front wheel drive has largely been con fined in practice to automobiles and light com mercial vehicles, using power trains incorporat ing specially constructed combined gearbox/dif ferential units.

The present invention, which is defined in claim 1, allows the construction of a medium to heavy truck with front wheel drive and a low level load platform while make use mainly of standard components used in rear wheel drive trucks.

Embodiments of the present invention will now be described by way of example, with ref erence to the accompanying drawings, in which

Fig. 1 is a side view of a delivery vehicle in accordance with the present invention;

Fig. 2 is a plan view of the load area of the vehicle of Fig. 1;

Fig. 3 is a front view of the vehicle of Fig. 1;

Fig. 4 is a part cut-away side view of the cab and drive unit of the vehicle of Fig. 1;

Fig. 5 is a part cut-away rear view of the vehicle of Fig. 1;

Fig. 6 is a detail front view of part of the rear axle assembly of the vehicle of Fig. 1;

Fig. 7 is a detail side view of part of the rear axle assembly of the vehicle of Fig. 1;

Fig. 8 is a detail end view of part of the load area of the vehicle of Fig. 1; and

Fig. 9 is a detail plan view of part of the load area of the vehicle of Fig. 1.

Fig. 10 is a detail view of part of an alternative rear axle assembly of the vehicle of Fig. 1.

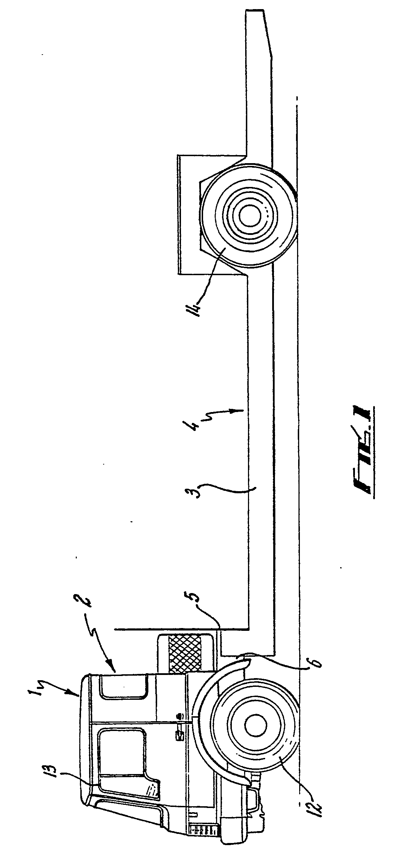

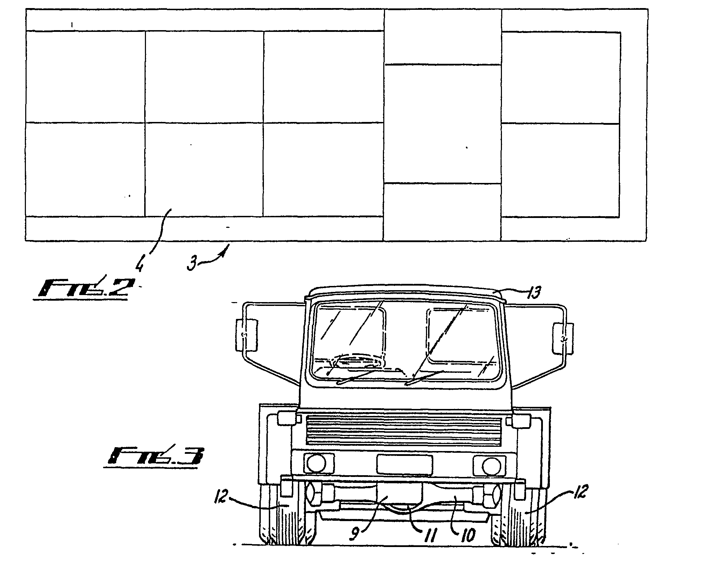

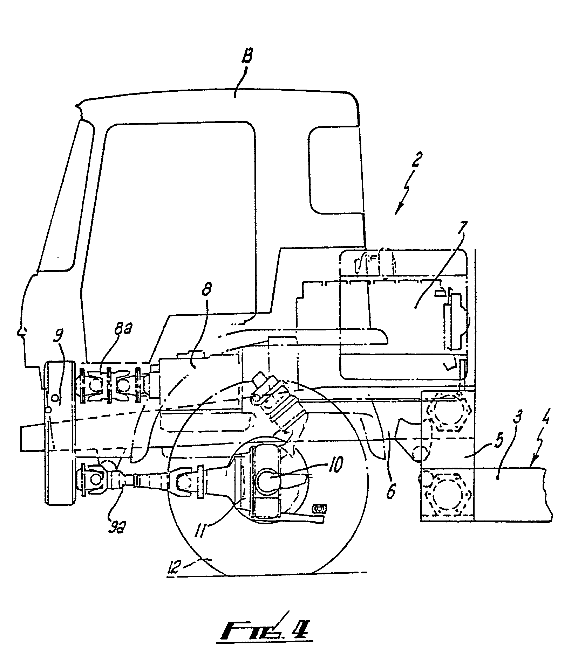

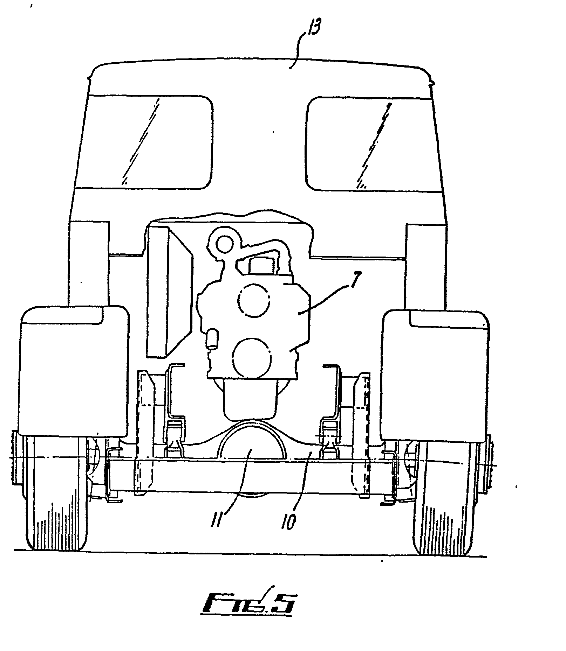

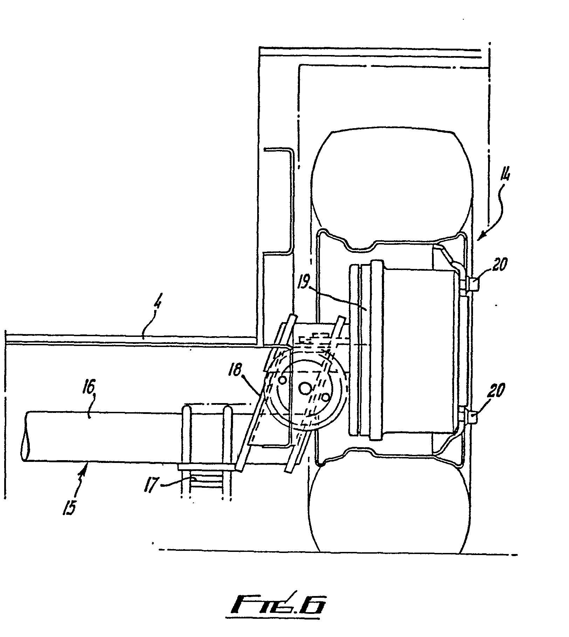

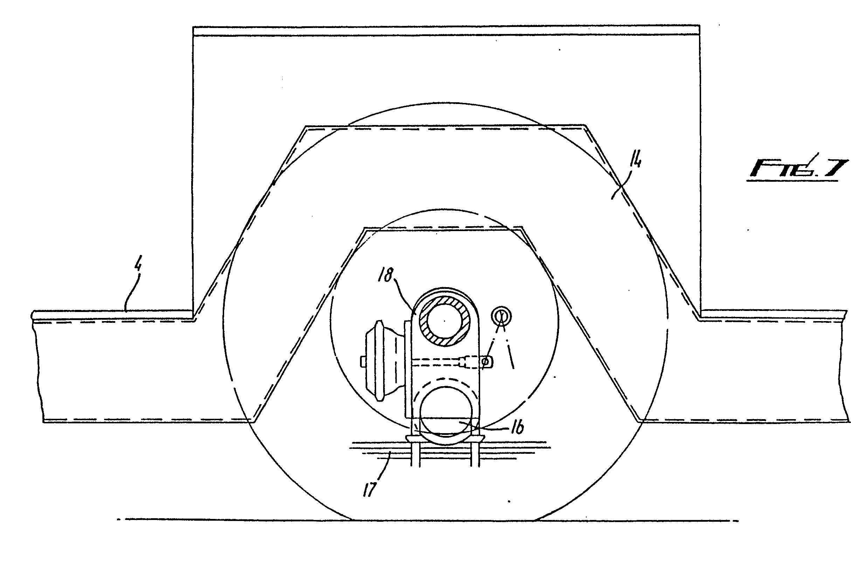

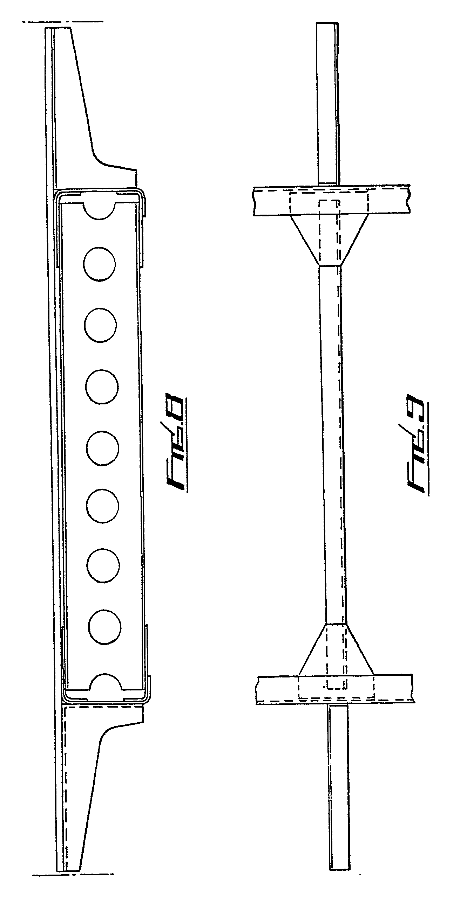

Detailed description

Referring to the drawings, a vehicle 1 has a front cab section 2 and a rear section 3, having a loading area 4, connected to the front section 2 at 5.

The front section 2 has a chassis 6 on which is mounted an engine 7, a gearbox 8, a transfer box 9 and an axle 10 having a differential unit 11. The axle 10 has a pair of steerable roadwheels 12 mounted on it. A cab assembly 13 is mounted on the chassis 6.

The rear section 3 is supported at one end by being bolted to the front section 2 at 5 and at the other end by a pair of roadwheels 14 mounted on an axle assembly 15.

The axle assembly 15 comprises a beam axle 16 mounted on the rear section 3 by way of underslung leaf springs 17. The axle 16 has upwardly extending end portions 18 on which a stub axle amd hub units 19 are mounted. The wheels 14 attach over the hub units 19 and are fixed in position by way of bolts 20.

The engine 7 is mounted back to front behind the axle 10 and drives forward to the gearbox 8 which is positioned over the axle 10. As the gearbox 8 is considerably smaller than the engine 7 the amount of intrusion into the cab 13 is minimised. The engine 7 and gearbox 8 are positioned so as not to cause wheel clearance problems when turning and a between kerb turning circle of 68 feet can be achieved. In addition the position of the engine allows easy access for maintenance work.

The gearbox 8 drives forward to the transfer box 9 via a coupling 8a. The transfer box 9 drops and reverses the drive to drive rearwardly via a drive shaft assembly 9a to the differential unit 11.

As all the drive and steering apparatus is contained within the front section 2 it is self-contained and does not put any constraints on the configuration of the load area 4 on the rear section 3 as there is no rearwardly extending driveshaft as in conventional vehicles.

The load area 4 can thus be arranged at a conveniently low level of some twenty inches above ground level.

The arrangement of the rear axle assembly 15 ensures that the load area 4 is clear and unrestricted over its full length of, in the embodiment illustrated, twenty-two feet. The arrangement of the stub axle and hub unit 19 on the upwardly extending end portions 18 of the beam axle 16 allows the level of the load area 4 to be brought down to or below the level of the rotational axis of the wheels 14. The large offset of the wheels 14 allows the stub axle and hub units 19 to be mounted substantially within the wheels 14 to ensure that the intrusion into the width of the load area 4 is minimised.

Thus a desired minimum load area 4 width between the wheel arches of 50 inches can be exceeded.

Further details of the engine, transmission and chassis layout will now be given.

The vehicle is loosely based on and has been developed from a standard Bedford TL 1630.

The changes from the specification of this vehicle have been made with the use of proprietary components whenever possible.

The engine utilised is the Cummins 6BTA the specifications of which are:—

| | |
|---|---|
| Dry weight | 893 lb |
| Approx. length | 39 inches |
| Cubic capacity | 5.9 litres (360 in$^3$) |
| Horsepower | 170 @ 2500 rev/min |
| Max. torque | 427 lb/ft @ 1500 rev/min |
| Specific fuel consumption | 0.360 lb/hp-hr. |

Either a manual or an automatic gearbox can be used. The standard manual gearbox fitted to the Bedford is the Spicer 5-speed T5C and this may be used in the current application. An alternative unit is the Eaton Truck Components model 542 series gearbox. Both the Spicer and Eaton boxes are of similar weight, with synchromesh on all gears except first and reverse, and of adequate torque capacity for the Cummins 6BTA.

With either box direct top gear is used for maximum fuel economy with a bottom gear ratio of approximately 7 to 1 for optimum gradeability.

As the box is installed "back-to-front", the gear shift pattern is also reversed.

Eaton manufacture a unit for bolting to the top cover of the box, which converts the gate back to the conventional layout, and this may be included if desired. The Spicer does not need such an adaptor as it is virtually "back-to-front" in the normal installation and hence has a conventional pattern in the current vehicle.

If an automatic transmission is preferred then the Detroit Diesel Allison AT 545 model may be used. This box has a single-stage 3 element torque converter and a 4-speed shift-section, and is specifically designed for medium duty applications of a multi-stop nature. It is suitable for all engines up to 235 American BHP (i.e. about 210 bhp to B.S.A.U. 141).

This gearbox installs relatively easily in place of the Eaton or Spicer manual box, being about one inch longer and only 25 lbs or so heavier.

The transfer gearbox is designed specifically for the current vehicle.

It is of simple design and robust construction. Helical gears are used for quiet running and well-specified bearings for life-long service. The gearing may be arranged to provide either higher or lower overall gearing than the main transmission can offer if necessary.

The front axle used is the G.K.N. Kirkstall SD65-11-1S steer-drive axle. The G.K.N. axle has a design plated weight of 8.9 tons (subject to tyre size) and is more than adequate for the worst possible overload condition likely to be encountered in use.

Various options of wheel fixings and foundation brakes may be used. The optional fitment of a diff-lock is recommended as weight transfer is from the front axle to the rear axle on steep uphill gradients.

By its construction and need to carry drive shafts through the king-pin, a front wheel drive axle always has a lock-angle limit of less than a conventional axle. The SD65 is no exception, maximum lock being 40°. This gives a turning circle of some 68 ft diameter kerb-to-kerb.

The front tyre specification is D 22.5 Pilote (315/70 R22.5) PR16. These are standard "low-profile" tyres and have a plated load capacity of 6.5 tons.

The need to allow the load area to be continued without interruption by a hump over the rear axle necessitated the use of the low level axle assembly.

By using a simple 5 inch diameter tube for the axle beam, cutting the beam and dropping the main length of it by approximately 9 inches the load area may be continued rearwards without interruption. In order to obtain the maximum width between the wheel arches, the brake cams and actuators are pushed outboard as far as possible.

This allows a width of 51 inches between wheel arches to be obtained. The tyre specification is 16.5 R 22.5 PR 20 on 13 inch rims with a plated capacity of 10.14 ton. A weight saving of 90 kg is gained when compared to the conventional low-profile twin tyres.

The performance and loading characteristics of the above specific vehicle are detailed below.

With the direct-top gearbox D 22.5 tyres and an axle ratio of 4.53 the maximum governed road speed is 61.30 mph.

Gradeability with 7 to 1 bottom gear and D 22.5 tyres, indicates a maximum gradeability of 20.6% (i.e. 1 in 4.9) assuming that wheelspin does not occur.

To avoid the possibility of front axle overloading items such as the fuel tank and the batteries may be mounted behind the rear axle thus improving the weight distribution.

The Bedford Chassis frame is a conventional "ladder-type" frame with side-rails of 10.3"×3.2'×.31" section. From the front of the vehicle to just behind the front spring rearmost hanger bracket the same side-rail section and profile are retained with some modifications necessary to the cross-member upon which the auxiliary transfer box is mounted. Immediately behind the hanger bracket the frame drops vertically 16 inches before the side-rail continues rearwards at the lower level. At this point a bolted joint using tubular cross-members is used. A bolted construction allows the vehicle to be considerd as "modules". If a new rear or front section is desired then the vehicle may be unbolted and renewed as required. Behind the "drop-joint" the same side-rail section of 10.5 inches is retained.

The frame width over the side rails is 42 inches.

The frame incorporates outriggers bolted outboard of the chassis side-rails at the cross-member locations. A simple and strong platform is then constructed by the use of preformed aluminium sections or hardwood planking simply constructed on top of the frame. The radiator is relocated behind the cab as the transmission components unavoidably take up all the area available between the engine and the front chassis cross-member. The radiator is mounted on the nearside behind the cab. The radiator area is relatively small, 3 square feet of core being required for cooling the Cummins 6BTA. The fuel tank is a shallow tank preferably 10 inches deep mounted inside the chassis frame made to utilise most of the inside width of the chassis, a capacity of 45 gallons may be accommodated in a tank about 36 inches long. As discussed a rear mounted location is the most suitable.

The vehicle illustrated is particularly adapted for use as a brewery delivery vehicle with the load area being of sufficient size to accommodate eight pallets six between the axles and two behind the rear axle.

This type of low level load area vehicle may be used for many other uses when a low level would be advantageous. Examples are other delivery vehicles and furniture vans.

The use of these low load level vehicles leads to a number of further advantages. For example the constraints whereby factory floor levels have to be built high enough to ensure that loading bays are at a suitable height for conventional vehicle loading platforms no longer apply.

Modifications and improvements may be made without departing from the scope of the invention.

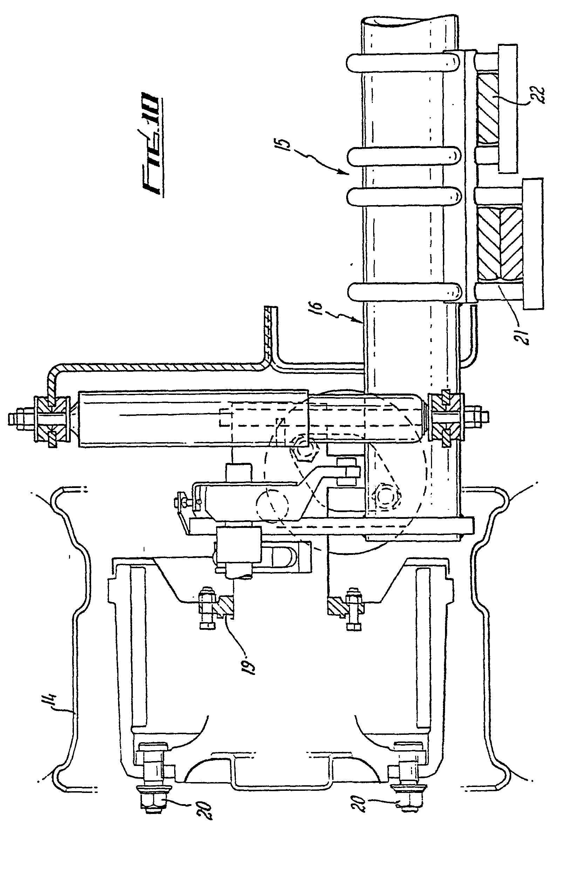

For example a modified rear axle assembly is illustrated in Fig. 10. As the beam axle 16 is mounted at a low level the space available for the spring stack is limited. Thus as an alternative to the conventional dual rate spring installation, where the main and helper leaf springs are mounted in the same plane, the embodiment illustrated has a main spring 21 and a helper spring 22 mounted side by side to work on different but parallel planes. This provides a shallower spring height which assists in achieving a low floor height.

**Claims**

1. A goods vehicle having a non-articulated chassis supporting a load platform (4) and a cab (13), and comprising:

rear ground-engaging wheels (14) carried by a rear axle means (15),

front ground-engaging wheels (12) steerably mounted on a front axle means (10) which includes a differential (11),

a power train including an engine (7) and a change-speed gearbox (8), the power train being positioned substantially beneath the cab (13) and driving the front wheels (12) via the front axle means (10),

and in which the engine (7) is to the rear of the front axle means (10), the change-speed gearbox (8) is forward of the engine (7), and a power transfer means (9) is provided for returning the power transmission path rearwardly to the front axle means (10);

characterised in that the engine (7) is above the front axle means (10) and above the load platform (4),

the change-speed gearbox (8) is adjacent the forward end of the engine (7) such that the cab (13) has an unobstructed transverse floor area forward of the change-speed gearbox (8),

the power transfer means comprise a transfer gearbox (9) forward of the change-speed gearbox (8), said transfer gearbox (9) having an input substantially level with the change-speed gearbox (8) and an output at a lower level, and

a transmission shaft (9a) is provided which interconnects said transfer gearbox output and said differential (11).

2. The vehicle of claim 1, in which the load platform (4) is carried on chassis rails extending rearwardly of the cab (13) at approximately the same height as the front axle means (10), and the rear axle means (15, 16, 18) passes beneath said chassis rails to permit at least a central portion of the load platform (4) to be at said height for the full length of the load platform.

3. The vehicle of claim 2, including a fuel tank and one or more batteries positioned below the load platform to the rear of the rear axle means.

**Patentansprüche**

1. Lastfahrzeug mit einem nichtgelenkigen Chassis, das eine Ladeplattform (4) und ein Fahrerhaus (13) trägt, mit

hinteren Bodenrädern (14), die von einer Hinterachseneinrichtung (15) getragen sind,

vorderern Bodenrädern (12), die steuerbar an einer ein Differential (11) aufweisenden Vorderachseneinrichtung (10) montiert sind,

einem Antriebsstrang mit einem Motor (7) und einem Gangwechsel-Getriebe (8), wobei der Antriebsstrang im wesentlichen unterhalb des Fahrerhauses (13) angeordnet ist und die Vorderräder (12) über die Vorderachseneinrichtung (10) antreibt,

und wobei der Motor (7) hinter der Vorderachseneinrichtung (10) angeordnet ist, das Gangwechsel-Getriebe (8) vor dem Motor (7) angeordnet ist, und eine Antriebsübertragungseinrichtung (9) vorgesehen ist, die den Antriebsübertragungsweg nach hinten zur Vorderachseneinrichtung (10) rückführt;

dadurch gekennzeichnet, daß der Motor (7) oberhalb der Vorderachseneinrichtung (10) und oberhalb der Ladeplattform (4) angeordnet ist,

das Gangwechsel-Getriebe (8) in der Nähe des vorderen Endes des Motors (7) derart angeordnet ist, daß das Fahrerhaus (13) einen unbehinderten Querbodenbereich vor dem Gangwechsel-Getriebe (8) aufweist,

die Antriebsübertragungseinrichtung ein vor dem Gangwechsel-Getriebe (8) angeordnetes Übertragungsgetriebe (9) aufweist, das einen Eingang im wesentlichen auf gleichem Niveau wie das Gangwechsel-Getriebe (8) und einen Ausgang auf einem niedrigeren Niveau aufweist, und

eine Übertragungswelle (9a) vorgesehen ist, die den Ausgang des Übertragungsgetriebes und das Differential (11) miteinander verbindet.

2. Fahrzeug nach Anspruch 1, bei dem die Ladeplattform (4) von Chassis-Schienen getragen ist, die sich rückwärtig von dem Fahrerhaus (13) annähernd in gleicher Höhe wie die Vorderachseneinrichtung (10) erstrecken, und die Hinterachseneinrichtung (15, 16, 18) unterhalb der Chassis-Schienen so durchläuft, daß mindestens ein mittlerer Bereich der Ladeplattform (4) über die gesamte Länge der Ladeplattform auf dieser Höhe verlaufen kann.

3. Fahrzeug nach Anspruch 2, mit einem Kraftstofftank und einer oder mehreren Batterien, die unterhalb der Ladeplattform hinter der Hinterachseneinrichtung angeordnet sind.

**Revendications**

1. Véhicule pour marchandises, à châssis non-articulé supportant une plateforme (4) de changement et une cabine (13), et comprenant:

des roues arrières (14) de contact au sol portées par un dispositif d'essieu arrière (15),

des roues avant (12) de contact au sol montées de façon dirigeable sur un dispositif d'essieu avant (10) qui comporte un différentiel (11),

un groupe motopropulseur comprenant un moteur (7) et une boîte (8) de changement de vitesse, le groupe motopropulseur étant disposé sensiblement sous la cabine (13) et entraînant les roues avant (12) par l'intermédiaire du dispositif d'essieu avant (10), et dans lequel le moteur (7) est à l'arrière du dispositif d'essieu avant (10), la boîte de changement de vitesse (8) est à l'avant du moteur (7), et un dispositif (9) de transmission de puissance est prévu pour renvoyer la transmission de puissance vers l'arrière au dispositif d'essieu avant (10);

caractérisé en ce que le moteur (7) est au-dessus du dispositif d'essieu avant (10) et de la plateforme de chargement (4),

la boîte (8) de changement de vitesse est voisine de l'extrémité avant du moteur (7) de sorte que la cabine (13) a une zone de plancher transversale libre à l'avant de la boîte de changement de vitesse (8),

le dispositif de transmission de puissance comporte une boîte (9) à engrenages de transmission à l'avant de la boîte (8) de changement de vitesse, ladite boîte (9) ayant une entrée sensiblement au niveau de la boîte (8) de changement de vitesse et une sortie à un niveau inférieur, et en ce que

un arbre de transmission (9a) est prévu pour relier ladite sortie de boîte de transmission et ledit différentiel (11).

2. Véhicule selon la revendication 1, dans lequel la plateforme de chargement (4) est portée sur des longerons de châssis s'étendant à l'arrière de la cabine (9) approximativement à la même hauteur que le dispositif d'essieu avant (10), et en ce que le dispositif d'essieu arrière passe au dessous de ces longerons de châssis de façon à laisser au moins une partie centrale de la plateforme de chargement (4) à ladite hauteur sur toute la longueur de la plateforme de chargement.

3. Véhicule selon la revendication 1, comprenant un réservoir de carburant et une ou plusieurs batteries sous la plateforme de chargement à l'arrière du dispositif d'essieu arrière.

*FIG.1*

1

FIG.2

FIG.3

FIG. 4

FIG.5

4

EP 0 210 768 B1

FIG.6

5

FIG.7

EP 0 210 768 B1

Fig.8

Fig.9

FIG.10